Europäisches Patentamt

European Patent Office

Office européen des brevets

(11) Publication number: **0 311 453 B1**

# EUROPEAN PATENT SPECIFICATION

(45) Date of publication of patent specification: **02.09.92**  (51) Int. Cl.⁵: **E05B  5/00**

(21) Application number: **88309422.9**

(22) Date of filing: **07.10.88**

(54) **Automotive outer door operating member.**

(30) Priority: **09.10.87 JP 255916/87**

(43) Date of publication of application:
**12.04.89 Bulletin  89/15**

(45) Publication of the grant of the patent:
**02.09.92 Bulletin  92/36**

(84) Designated Contracting States:
**AT BE CH DE ES FR GB GR IT LI LU NL SE**

(56) References cited:
**EP-A- 0 212 364**

(73) Proprietor: **POLYPLASTICS CO. LTD.**
**30, Azuchimachi 2-chome**
**Higashi-ku Osaka-shi Osaka(JP)**

(72) Inventor: **Nakai, Masakazu**
**287-8, Morishima**
**Fuji-shi, Shizuoka(JP)**
Inventor: **Inamura, Naotoshi**
**3-22, Irie 3-chome**
**Shimizu-shi, Shizuoka(JP)**

(74) Representative: **Jackson, Peter et al**
**HYDE, HEIDE & O'DONNELL 10-12 Priests**
**Bridge**
**London SW15 5JE(GB)**

**Description**

Field of Utilization in Industry

The present invention relates to an automotive outer door operating member comprising a handle and arms integrally formed of a thermoplastic resin.

Related Art

The automotive outer door operating member is required to satisfy both functional and aesthetic requirements.

Most conventional automotive outer door operating members have been die-cast zinc members or pressed metallic plate members. However, recent demand for the weight reduction of automobiles has urged the use of resins such as polyacetal, polybutylene terephthalate and polycarbonate for forming outer door operating members.

The use of a resin form forming an automotive outer door operating member brings about such various advantages as the possibility of integrally forming the handle and the arms, the possibility of very economically manufacturing automotive outer door operating members through an injection molding process, the possibility of producing colored automotive outer door operating members by using a colored resin, and the possibility of optionally decorating automotive outer door operating members after molding by plating or painting. (See EP-A1-0 183 880)

However, since the arms of such an integral automotive outer door operating member extends from the backside of the handle, shrinkage recesses are formed in the surface of the handle at positions respectively corresponding to the junctions of the handle and the arms, thereby the appearance of the handle is spoiled greatly to deteriorate the commercial value of the automotive outer door operating member. Accordingly, the improvement of the resin automotive outer door operating member has been desired to eliminate such a disadvantage.

BRIEF DESCRIPTION OF THE DRAWINGS

Figure 1 is a rear elevation of an outer door operating member in a preferred embodiment according to the present invention;
Figure 2 is a sectional view taken on line B-B' in Fig. 1;
Figure 3 is a rear elevation of an outer door operating member in another embodiment according to the present invention;
Figure 4 is a sectional view taken on line C-C' in Fig. 3;
Figure 5 is a rear elevation of a conventional automotive outer door operating member;
Figure 6 is a side elevation of the automotive outer door operating member of Fig. 5;
Figure 7 is a sectional view taken on line A-A' in Fig. 5; and
Figure 8 is a schematic sectional view of an automotive outer door operating member having a back cover joined to a handle at a position at a distance from the lower edge of the handle.
1: Handle
2: Arm
3: Back cover
4: Recessed portion
5: root of arm

Summary of the Invention

The inventors of the present invention made zealous studies to solve such problems accompanying forming the resin automotive outer door operating member, and the present invention has been made on the basis of the studies.

An automotive outer door operating member according to the present invention is an integral member formed of a thermoplastic resin, comprising a handle and arms, characterized in that the thickness ratio of the root of each arm to that of the handle at the junctions of the arms and the handle is 0.5 or below.

The thickness ratio specified by the present invention is the thickness ratio of the root of each arm to the handle at the junctions of the arms and the handle, and the present invention does not place any restriction on the thickness ratio for other portions of the arms and the handle. Moreover, the thickness of

2

portions around the root of the arms and the thickness of the corresponding portions of the handle need not be uniform over the entire portions, and the thickness of the root of the arms and that of the corresponding portions of the handle may vary partially according to purposes. Essentially, it is required that the ratio of the average thickness of the root of each arm to that of the corresponding portion of the handle is 0.5 or below.

Thus the invention also provides an external operating member for a vehicle door comprising an external handle plate with an outer and inner face, and at least one lever arm joined to the inner face of the handle plate and extending therefrom so as to operate a door release mechanism, the said handle plate and arm(s) being formed integrally from a thermoplastic resin, characterised in that the ratio of the thickness of the or each arm at its junction with the handle plate to the thickness of the handle plate at the said junction is less than 0.5.

The limited thickness of the lever arm at the point of junction serves to reduce or eliminate any surface irregularity affecting the aesthetic appearance of the outer face of the handle plate. The term "thickness" employed herein refers to the wall thickness of the thermoplastic resin at the respective point: if a hollow construction of the arm or plate is employed the "thickness" refers to the thermoplastic resin and not to any hollow space between adjacent walls of the resin. In certain embodiments of the invention it is preferred to form a portion of the arm in a hollow construction.

In one embodiment of the invention the door operating member includes a finger plate (also referred to herein as a "back cover") joined to the inner face of the handle plate and integral with the said handle plate. In order to avoid this finger plate causing surface irregularities on the outer face of the handle plate, the ratio of the thickness of the finger plate at its junction with the handle plate to the thickness of the handle plate at the said junction should also be less than 0.5

The finger plate may typically extend rearwards at an upward angle from the lower inside edge of the handle plate.

A door operating member embodying the present invention will be described hereinafter with reference to the accompanying drawings in comparison with a conventional automotive outer door operating member.

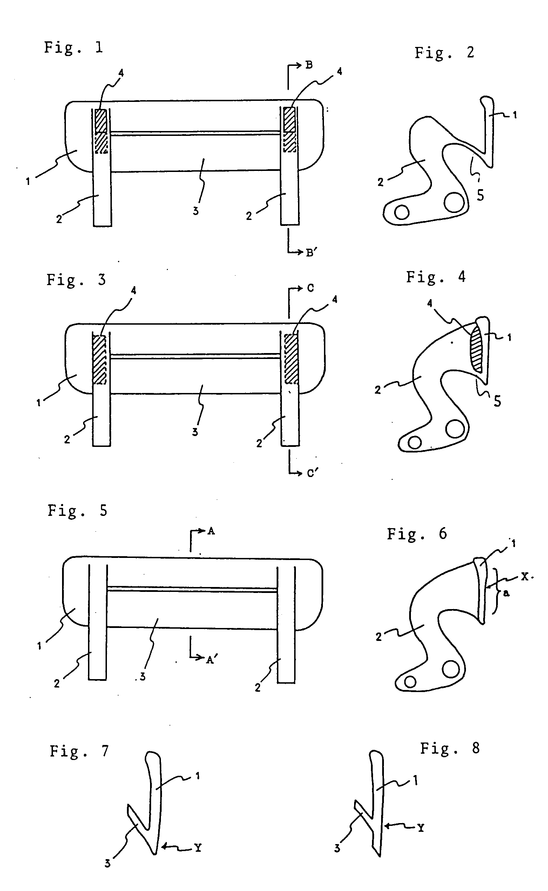

Figs 5 to 7 show a conventional outer door operating member. Fig 5 is a rear elevation of the outer door operating member, Fig 6 is a side elevation of the outer door operating member of Fig. 5, and Fig 7 is a sectional view taken on line A-A' in Fig 5. In Figs 5 to 7, indicated at 1 is a handle, at 2 are arms, and at 3 is a back cover extending from the lower edge of the handle 1. Fig 8 shows another outer door operating member, in which a back cover 3 extends from an inner part of a handle 1.

In this outer door operating member, shrinkage recesses develop in the outer surface of the handle 1 at positions indicated at X in Fig. 6 corresponding to the junctions of the handle 1 and the arms 2.

According to the present invention, the thickness ratio of the root of the arms to the handle at positions corresponding to the junctions of the handle and the arms is substantially 0.5 or below, thereby the development of shrinkage recesses in the outer surface of the handle at positions corresponding to the junctions of the handle and the arms is prevented. When the thickness ratio is greater than 0.5, it is impossible to prevent the development of shrinkage recesses which are unacceptable in respect of appearance. Preferably, the thickness ratio is 0.4 or below and, more preferably, 0.3 or below.

The present invention does not place any particular restriction on the method of forming an outer door operating member meeting the requirement in the thickness ratio of the arms to the handle. For example, the arm of an outer door operating member may be formed entirely in a small thickness so that the thickness ratio of the outer door operating member falls in the range of thickness ratio specified by the present invention. However, since the arms are required to have a considerable strength and, in most conventional outer door operating members, the arms are considerably thick as compared with the handle, it is preferable, in view of preventing shrinkage recesses and the strength of the outer door operating member, to reduce the thickness of the arms only in an appropriate part of the root of each arm so that the thickness ratio of the outer door operating member falls in the range of thickness ratio specified by the present invention.

Figs. 1 and 2 show an automotive outer door operating member embodying the present invention. Fig. 1 is a schematic rear elevation of the outer door operating member, and Fig. 2 is a sectional view taken on line B-B' in Fig. 1. In this outer door operating member, a shaded portion 4 of each arm 2 is formed in a hollow construction to reduce the thickness of the root thereof.

In a portion of the outer surface of the handle corresponding to the junction of the handle and the arm, a conspicuous shrinkage recess is liable to develop in the middle portion of the handle between the upper and lower edges of the handle, for example, in a portion indicated at a in Fig. 6. Therefore, the thickness of the entire part of the root of the arm need not be reduced. As shown in Figs. 3 and 4 showing another embodiment of the present invention, it is possible and effective to reduce the thickness of only a portion of the root of the arm corresponding to the portion of the outer surface of the handle in which a conspicuous shrinkage recess is liable to develop. Fig. 3 is a schematic rear elevation of an outer door operating member and Fig. 4 is a schematic sectional view taken on line C-C′ in Fig. 3. In Figs. 3 and 4, a shaded portion 4 of the arm is recessed to reduce the thickness of the root of the arm.

As mentioned above, the root of the arm need not be formed uniformly in a reduced thickness; the thickness of the root of the arm may optionally be varied as desired from portion to portion. Essentially, the root of the arm may be formed in any form as long as the average thickness ratio is 0.5 or below.

According to the present invention, the thickness ratio may be a value greater than zero. However, preferably, in view of the strength of the junctions of the arms and the handle, the thickness ratio is 0.05 or above and, more preferably, 0.1 or above.

Shrinkage recesses develop in the outer surface of the handle 1 in a portion corresponding to the junction of the back cover 3 and the handle 1 (portions indicated at Y in Figs. 7 and 8). Particularly, when the junction of the back cover 3 and the handle 1 is located at a distance from the edge (the lower edge in Fig. 8) of the handle 1 as shown in Fig. 8, conspicuous shrinkage recesses develop in the outer surface of the handle 1. In this case also, the development of shrinkage recesses can effectively be prevented by forming the root of the back cover in a thickness so that the thickness ratio of the root of the back cover to the handle is 0.5 or below.

Thus, the present invention is characterized by the morphology of the outer door operating member and places no restriction on the resin for forming the outer door operating member. However, in view of requisite physical properties of the outer door operating member, preferable resins for forming the outer door operating member are a polyacetal resin, a polybutylene terephthalate resin, a polycarbonate resin and such.

Examples

The present invention will be described in detail hereinafter with reference to examples thereof. However, the present invention is not limited in its application to these examples specifically described herein.

Examples 1 to 15 and Controls 1 to 7

Outer door operating members were formed respectively of different resins shown in Table 1 by molding in different thickness ratios (thickness ratios each of the root of the arm to the corresponding portion of the handle, and thickness ratios each of the root of the back cover to the corresponding portion of the handle) shown in Table 1 in a morphology shown in Figs. 1 and 2, and a morphology shown in Fig. 8. The resins used for forming the outer door operating members are a polyacetal resin, a polybutylene terephthalate resin and a polycarbonate resin. The thickness of the handle is 4 mm, which is the thickness of the handles of general outer door operating members. The thickness of the arms which are not recessed is 7 mm, in which the thickness ratio is 1.75.

The absolute sizes of shrinkage recesses formed in the outer surface of the handle of each outer door operating member thus formed by molding in portions corresponding to the junctions of the arms and the handle and in a portion corresponding to the junction of the back cover and the handle, and the condition of the shrinkage recesses was evaluated through visual observation. The results of measurement and observation are tabulated in Table 1.

Table 1 (1)

| | Material | Thickness ratio | Results | | | |
|---|---|---|---|---|---|---|
| | | | Junction of arms and handle | | Junction of back cover and handle | |
| | | | Size of shrink-age recess (μm) | Appear-ance[*] | Size of shrink-age recess (μm) | Appear-ance[*] |
| Example 1 | Polyacetal resin (DURACON M90-35) | 0.50 | 5 | ○ | 4 | ○ |
| Example 2 | | 0.30 | 2 | ◎ | 1 | ◎ |
| Example 3 | | 0.20 | 0 | ◎ | 0 | ◎ |
| Control 1 | | 1.75 | 81 | × × | 75 | × × |
| Control 2 | | 0.75 | 21 | × | 19 | × |
| Example 4 | Polyacetal resin (DURACON MP-01) | 0.50 | 3 | ◎ | 3 | ◎ |
| Example 5 | | 0.30 | 1 | ◎ | 1 | ◎ |
| Example 6 | | 0.20 | 0 | ◎ | 0 | ◎ |
| Control 3 | | 0.75 | 12 | △ | 13 | △ |
| Example 7 | Polybutylene terephthalate resin (DURANEX 2002) | 0.50 | 2 | ◎ | 2 | ◎ |
| Example 8 | | 0.30 | 0 | ◎ | 1 | ◎ |
| Example 9 | | 0.20 | 0 | ◎ | 0 | ◎ |
| Control 4 | | 0.75 | 9 | △ | 9 | △ |

EP 0 311 453 B1

Table 1 (2)

| Material | | Thickness ratio | Results | | | |
|---|---|---|---|---|---|---|
| | | | Junction of arms and handle | | Junction of back cover and handle | |
| | | | Size of shrinkage recess (μm) | Appearance *1 | Size of shrinkage recess (μm) | Appearance *1 |
| Example 10 | Polybutylene terephthalate resin (DURANEX 3300) | 0.50 | 5 | O | 5 | O |
| Example 11 | | 0.30 | 3 | ◎ | 2 | ◎ |
| Example 12 | | 0.20 | 2 | ◎ | 0 | ◎ |
| Control 5 | | 1.75 | 72 | ×× | 69 | ×× |
| Control 6 | | 0.75 | 17 | × | 17 | × |
| Example 13 | Polycarbonate resin (Iupilon S-1000) | 0.50 | 2 | ◎ | 3 | ◎ |
| Example 14 | | 0.30 | 0 | ◎ | 0 | ◎ |
| Example 15 | | 0.20 | 0 | ◎ | 0 | ◎ |
| Control 7 | | 0.75 | 8 | △ | 9 | △ |

*1 ◎ Excellent. No shrinkage recess

O Fairly good. Practically acceptable shrinkage recesses

△ Bad. Conspicuous, practically questionable shrinkage recesses

× and ×× Very bad. Large or deep, practically rejectable shrinkage recesses

Practically acceptable size of the shrinkage recesses is on the order of 5 μm or below and, preferably, 3 μm or below. As is obvious from Table 1, the thickness ratio must be 0.5 or below and, preferably, 0.3 or below to prevent the development of shrinkage recesses having a size exceeding the foregoing acceptable size.

Effect of the Invention

As apparent from the foregoing description and the examples, according to the present invention, an automotive outer door operating member is formed of a resin in an integral member so that the thickness ratio at the junction of the arms and handle thereof and, when desired, the thickness ratio at the junction of the back cover and handle thereof are 0.5 or below, thereby the development of shrinkage recesses in the outer surface of the handle can be suppressed to a practically acceptable extent to provide an automotive outer door operating member having a satisfactory appearance and a high commercial value.

Furthermore, the automotive outer door operating member can very economically be formed of a thermoplastic resin through an injection molding process, and the molded automotive outer door operating member can comparatively easily be decorated by coloring, plating or painting.

## Claims

1. An automotive outer door operating member integrally formed of a thermoplastic resin and comprising: a handle (1); and arms (2) extending from the handle (1); characterized in that the thickness ratio of the root of each arm (2) to the handle (1) at the junctions of the arms (2) and the handle (1) is 0.5 or below.

2. An external operating member for a vehicle door comprising an external handle plate (1) with an outer and inner face, and at least one lever arm (2) joined to the inner face of the handle plate (1) and extending therefrom so as to operate a door release mechanism, the said handle plate (1) and arm(s) (2) being formed integrally from a thermoplastic resin, characterised in that the ratio of the thickness of the or each arm (2) at its junction with the handle plate (1) to the thickness of the handle plate (1) at the said junction is less than 0.5.

3. A door operating member as claimed in claim 1 or claim 2, which comprises a finger plate (3) joined to the handle (1) and integral therewith and in which the ratio of the thickness of the finger plate (3) at its junction with the handle (1) to the thickness of the handle (1) at the said junction is less than 0.5.

4. A door operating member as claimed in any preceding claim, in which the thickness ratio ranges from 0.05 to 0.5.

5. A door operating member as claimed in any preceding claim, in which the thickness ratio is less than 0.3.

6. A door operating member as claimed in any preceding claim, in which the thickness ratio is less than 0.1.

7. A door operating member as claimed in any preceding claim in which a portion of the or each arm (2) is of hollow construction.

8. A door operating member as claimed in any preceding claim, in which the resin is polyacetal, polybutylene phthalate or polycarbonate.

## Patentansprüche

1. Außenbetätigungsteil für eine Kraftfahrzeugtür, das einstückig aus einem thermoplastischen Harz geformt ist und aufweist: einen Griff (1); und sich von dem Griff (1) erstreckende Arme (2); dadurch gekennzeichnet, daß das Dickenverhältnis der Basis jedes Arms (2) zum Griff (1) an den Verbindungsstellen zwischen den Armen (2) und dem Griff (1) 0,5 oder weniger beträgt.

2. Äußeres Betätigungsteil für eine Fahrzeugtür mit einer äußeren Griffplatte (1), die eine Innen- und eine Außenseite aufweist, und wenigstens einem mit der Innenseite der Griffplatte (1) verbundenen und sich von dieser erstreckenden Hebelarm (2) zum Betätigen eines Türentriegelungsmechanismus, wobei die Griffplatte (1) und der Arm bzw. die Arme einstückig aus thermoplastischem Harz geformt sind, dadurch gekennzeichnet, daß das Verhältnis der Dicke des oder jedes Arms (2) an seiner Verbindungsstelle mit der Griffplatte (1) zu der Dicke der Griffplatte (1) an der Verbindungsstelle weniger als 0,5 beträgt.

3. Türbetätigungsteil nach Anspruch 1 oder 2, welches eine Fingerplatte (3) aufweist, die mit dem Griff

# EP 0 311 453 B1

(1) verbunden und einstückig mit diesem ist, und bei der das Verhältnis der Dicke der Fingerplatte (3) an deren Verbindungsstelle mit dem Griff (1) zur Dicke des Griffs (1) an der Verbindungsstelle weniger als 0,5 beträgt.

4. Türbetätigungsteil nach einem der vorhergehenden Ansprüche, bei dem das Dickenverhältnis zwischen 0,05 und 0,5 liegt.

5. Türbetätigungsteil nach einem der vorhergehenden Ansprüche, bei dem das Dickenverhältnis geringer als 0,3 ist.

6. Türbetätigungsteil nach einem der vorhergehenden Ansprüche, bei dem das Dickenverhältnis größer als 0,1 ist.

7. Türbetätigungsteil nach einem der vorhergehenden Ansprüche, bei dem ein Bereich des oder jedes Arms (2) hohl ausgebildet ist.

8. Türbetätigungsteil nach einem der vorhergehenden Ansprüche, bei dem das Harz Polyazetal, Polybutylphthalat oder Polykarbonat ist.

## Revendications

1. Organe extérieur d'actionnement de porte de véhicule automobile moulé d'une seule pièce en une résine thermoplastique et comprenant : une poignée (1), des bras (2) s'étendant depuis la poignée (3), caractérisé en ce que le rapport de l'épaisseur du pied de chaque bras (2) à celle de la poignée (1), aux jonctions des bras (2) et de la poignée (1), est de 0,5 ou moins.

2. Organe extérieur d'actionnement de porte de véhicule, comprenant une plaque externe (1) formant poignée avec une face externe et une face interne, et au moins un bras de levier (2) réuni à la face interne de la plaque (1) formant poignée et s'étendant à partir de celle-ci, pour actionner un mécanisme d'ouverture de porte, ladite plaque (1) formant poignée et les bras (2) étant venus de matière en une résine thermoplastique, caractérisé en ce que le rapport de l'épaisseur du bras, ou de chaque bras, (2) à sa jonction avec la plaque (1) formant poignée, à l'épaisseur de ladite plaque (1) à ladite jonction est inférieur à 0,5.

3. Organe extérieur d'actionnement de porte suivant la revendication 1 ou 2, comprenant une plaque (3) d'appui pour les doigts, venue de matière avec la poignée (1), et dans lequel le rapport de l'épaisseur de ladite plaque (3), à sa jonction avec la poignée, à l'épaisseur de celle-ci à ladite jonction est inférieur à 0,5.

4. Organe extérieur d'actionnement de porte suivant l'une quelconque des revendications précédentes, dans lequel le rapport d'épaisseur est compris dans la plage de 0,05 à 0,5.

5. Organe extérieur d'actionnement de porte suivant l'une quelconque des revendications précédentes, dans lequel le rapport d'épaisseur est inférieur à 0,3.

6. Organe extérieur d'actionnement de porte suivant l'une quelconque des revendications précédentes, dans lequel le rapport d'épaisseur est supérieur à 0,1.

7. Organe extérieur d'actionnement de porte suivant l'une quelconque des revendications précédentes, dans lequel une partie du bras, ou de chaque bras, (2) est creuse.

8. Organe extérieur d'actionnement de porte suivant l'une quelconque des revendications précédentes, dans lequel la résine est une résine polyacétal, de phtalate de polybutylène, ou de polycarbonate.

8

Fig. 1

Fig. 2

Fig. 3

Fig. 4

Fig. 5

Fig. 6

Fig. 7

Fig. 8